(19) Europäisches Patentamt
European Patent Office
Office européen des brevets

(11) Veröffentlichungsnummer : **0 028 788**
**B1**

(12) # EUROPÄISCHE PATENTSCHRIFT

(45) Veröffentlichungstag der Patentschrift : **26.01.83**

(51) Int. Cl.³ : **C 09 B 62/503**, D 06 P 3/02, D 06 P 3/66

(21) Anmeldenummer : **80106747.1**

(22) Anmeldetag : **03.11.80**

(54) **Kupferkomplex-Formazanverbindungen, Verfahren zu ihrer Herstellung und ihre Verwendung als Farbstoffe.**

(30) Priorität : **10.11.79 DE 2945537**

(43) Veröffentlichungstag der Anmeldung : **20.05.81 Patentblatt 81/20**

(45) Bekanntmachung des Hinweises auf die Patenterteilung : **26.01.83 Patentblatt 83/04**

(84) Benannte Vertragsstaaten : **BE CH DE FR GB IT LI**

(56) Entgegenhaltungen :
**DE A 1 719 083**
**FR A 2 360 643**

**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt/Main 80 (DE)**

(72) Erfinder : **Schwaiger, Günther, Dr.**
**Johannesallee 41**
**D-6230 Frankfurt am Main 80 (DE)**
Erfinder : **Hoyer, Ernst, Dr.**
**Eptingweg 3**
**D-6230 Frankfurt am Main 80 (DE)**

**EP 0 028 788 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Kupferkomplex-Formazanverbindungen, Verfahren zu ihrer Herstellung und ihre Verwendung als Farbstoffe

Die vorliegende Erfindung liegt auf dem technischen Gebiet der Metallkomplexformazanfarbstoffe.

Aus der deutschen Auslegeschrift 1 256 622 sind von den Tabellenbeispielen 14 und 15, des weiteren von der deutschen Auslegeschrift 17 19 083 Kupfer- und Nickelkomplexformazanfarbstoffe bekannt. Diese besitzen jedoch gewisse Mängel in ihren anwendungstechnischen Eigenschaften.

Es wurden nunmehr neue Kupferkomplex-Formazanverbindungen gefunden, die der allgemeinen Formel (1)

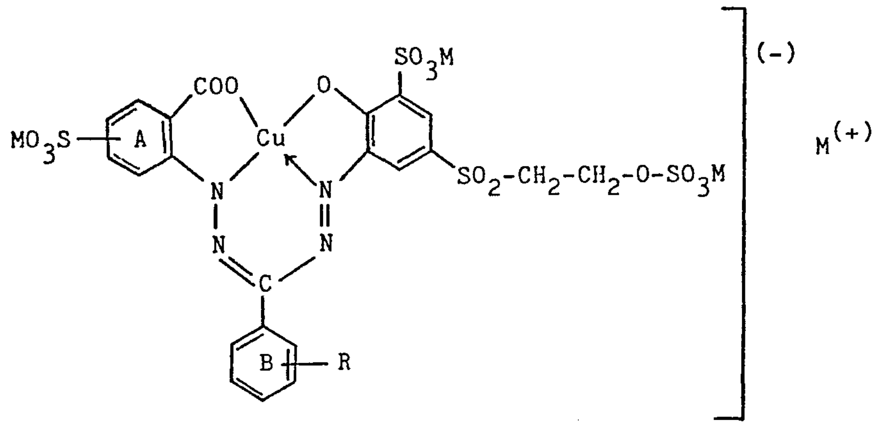

(1)

entsprechen, in welcher bedeuten :

M ist ein Wasserstoffatom oder das Äquivalent eines Metalls, vorzugsweise ein Alkalimetall oder eines Erdalkalimetalls, wie insbesondere Natrium oder Kalium und des Calciums.

R ist ein Wasserstoffatom oder ein Chloratom, das an den Phenylrest B vorzugsweise in 2- oder 4-Stellung gebunden ist ; die Sulfogruppe ist im Phenylenrest A vorzugsweise in m- oder p-Stellung zum Stickstoffatom an den aromatischen Kern gebunden.

Die neuen Verbindungen der allgemeinen Formel (1) können, in saurer Form vorliegen. Bevorzugt sind sie in Form ihrer Salze, insbesondere der oben genannten Alkali- und Erdalkalimetallsalze. Sie finden, bevorzugt in Form der Alkalimetallsalze, Verwendung zum Färben (im allgemeinen Sinne einschließlich des Bedruckens) von hydroxygruppenhaltigen, amino- und carbonamidgruppenhaltigen Materialien.

Die vorliegende Erfindung betrifft weiterhin Verfahren zur Herstellung der oben genannten und definierten Verbindungen der allgemeinen Formel (1). Die Verfahren sind dadurch gekennzeichnet, daß man eine aromatische Hydrazonverbindung der allgemeinen Formel (2)

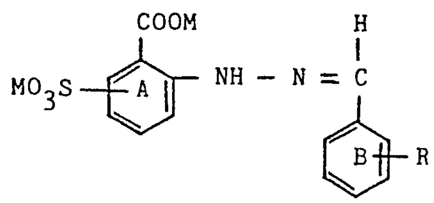

(2)

in welcher A, R, B und M die oben genannten Bedeutungen haben, mit der Diazoniumverbindung eines aromatischen Amins der Formel (3)

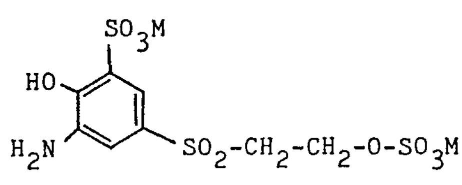

(3)

in welcher M die obengenannte Bedeutung hat, und mit einem kupferabgebenden Mittel umsetzt. Man kann hierbei in üblicher und analog bekannter Verfahrensweise zur Herstellung von Metallkomplexformazanfarbstoffen verfahren.

Vorzugsweise wird das erfindungsgemäße Verfahren bei einem pH-Wert von 4 bis 7, insbesondere von 5 bis 7, und bei einer Temperatur zwischen etwa 0 bis 20 °C durchgeführt.

Die Zugabe der Reaktionskomponenten kann beliebig sein, jedoch läßt das Verfahren sich leicht als Dreikomponentenreaktion durchführen.

Es hat sich als vorteilhaft erwiesen, nach der Kupplungs- und Metallisierungsreaktion das Reaktionsgemisch mit einer starken Mineralsäure, wie beispielsweise Salzsäure, auf einen pH-Wert von unterhalb 2,

beispielsweise auf einen pH-Wert von etwa 1, einzustellen und das Reaktionsgemisch noch einige Zeit, beispielsweise 30 Minuten bis zwei Stunden, bei Raumtemperatur (15-30 °C) bei diesem pH-Wert, ggf. unter Rühren, zu halten. Hierdurch werden verschiedene Echtheiten, wie die Lichtechtheit, Farbstärke und Reinheit der Farbnuance wesentlich verbessert. Es erübrigt sich hiermit die Trocknung bei Temperaturen über 100 °C, wie beispielsweise bei etwa 150 °C, die zu einer Verringerung der Farbausbeute der hergestellten Kupferkomplexformazanverbindungen führt.

Als kupferabgebende Verbindungen kommen beispielsweise die einfachen und die komplexen Salze des Kupfers infrage, wie beispielsweise Kupfersulfat, Kupferchlorid, Kupferacetat oder Kupfercarbonat und die Kupfersalze der Salicylsäure oder Weinsäure.

Verwendet man die Kupfersalze von Mineralsäuren, so arbeitet man zweckmäßig in Gegenwart eines säureabstumpfenden Mittels, wie beispielsweise eines Alkali- oder Erdalkalihydroxides oder -carbonats oder eines Alkalisalzes einer niederen Alkancarbonsäure, wie der Essigsäure, oder eines basischen Alkalisalzes der Phosphorsäure. Diese Alkali- oder Erdalkaliverbindungen sind insbesondere die Natrium- und Kaliumverbindungen, bevorzugt beispielsweise Natriumhydroxid, Kaliumhydroxid, Calciumhydroxid, Calciumcarbonat, Natrium- und Kaliumcarbonat, Natriumbicarbonat, Natriumacetat, Dinatriumhydrogenphosphat und Trinatriumphosphat.

Das kupferabgebende Mittel wird in äquimolaren Mengen verwendet, so daß auf eine zu bildende Verbindung der Formel (1) ein Kupferatom entfällt. Die Metallisierung geht üblicherweise schon bei Raumtemperatur zu Ende.

Die Herstellung der Kupferkomplexformazanverbindungen der allgemeinen Formel (1) kann man beispielsweise in der Weise durchführen, daß man die Hydrazonverbindungen der allgemeinen Formel (2) mit einem Alkali, wie Natronlauge oder Natriumcarbonat, in Wasser bei Raumtemperatur löst; vorzugsweise hält man den pH-Wert bei 6 bis 7. Anschließend gibt man die Diazoniumsalzlösung des Amins der allgemeinen Formel (3) hinzu, wobei man den pH-Wert der Reaktionslösung auf der einen Seite nicht alkalisch, auf der anderen Seite nicht zu stark sauer werden läßt, um zum einen die β-Sulfatoäthylsulfonylgruppe im alkalischen nicht zu schädigen und um zum anderen eine Ausfällung des Hydrazons und damit eine heterogene Reaktion im Sauren zu vermeiden. Vorzugsweise arbeitet man bei einem pH-Wert zwischen 4 bis 7, insbesondere 5 bis 7. Die Reaktionstemperatur soll zweckmäßig 20 °C, vorteilhaft 15 °C möglichst nicht überschreiten. Gleichzeitig, d.h. auch — zusammen mit —, oder nach der Zugabe der Diazoniumverbindung gibt man die äquimolare Menge an dem kupferabgebenden Mittel, beispielsweise als Kupfersulfat in wäßriger Lösung, hinzu. Auch die Metallisierungsreaktion wird vorteilhaft bei einem pH-Wert von 4 bis 7, insbesondere 5 bis 7, durchgeführt. Metallisierungs- und Kupplungsreaktion können nebeneinander herlaufen. Die Metallisierungsreaktion läuft verhältnismäßig schnell ab. Vor der Isolierung der hergestellten Metallkomplexformazanverbindung ist es, wie oben erwähnt, vorteilhaft, die Reaktionslösung mit beispielsweise konzentrierter Salzsäure oder Schwefelsäure auf einen pH-Wert von etwa 1 anzusäuern und etwa eine Stunden bei Raumtemperatur zu rühren; anschließend stellt man auf einen pH-Wert von 5 bis 6 und isoliert die hergestellte erfindungsgemäße Metallkomplexformazanverbindung in üblicher Weise, beispielsweise durch Aussalzen mittels eines Elektrolyten, wie Natriumchlorid oder Kaliumchlorid. Die Verbindung kann gegebenenfalls auch durch Eindampfen der Lösung, wie beispielsweise Sprühtrocknung, isoliert werden.

Die erfindungsgemäßen Verbindungen können aber auch hergestellt werden, indem man in gleicher Weise wie oben beschrieben, vorgeht, jedoch anstelle des Amins der allgemeinen Formel (3) die entsprechende 4-β-Hydroxyäthylsulfonyl-2-amino-phenol-6-sulfonsäure einsetzt. Die so erhaltene Kupferkomplexformazanverbindung enthält dann anstelle der β-Sulfatoäthylsulfonylgruppe in den erfindungsgemäßen Verbindungen der Formel (1) die β-Hydroxyäthylsulfonylgruppe. Die β-Hydroxyäthylsulfonyl-Verbindung kann in an und für sich üblicher Weise mit einem Sulfatierungsmittel, vorzugsweise mit Amidosulfonsäure oder Chlorsulfonsäure in Gegenwart von Pyridin, in die Sulfatoverbindung überführt werden.

Vorteilhaft jedoch ist die anfangs erwähnte erfindungsgemäße Herstellung unter Verwendung des aromatischen Amins der allgemeinen Formel (3).

Geht man bei der erfindungsgemäßen Verfahrensvariante zur Herstellung der allgemeinen Formel (1) von der 4-β-Hydroxyäthylsulfonyl-2-amino-phenol-6-sulfonsäure aus, so kann die Umsetzung zu den Metallkomplexformazanverbindungen auch bei einem pH-Wert zwischen 4 und 12 erfolgen; zur Metallisierung sollte jedoch ein pH-Wert zwischen 4 und 8 eingestellt werden, wenn sie ohne die Anwesenheit von Komplexbildnern, wie Weinsäure oder Zitronensäure oder Ammoniak, durchgeführt wird.

Die als Ausgangsverbindungen dienenden Hydrazonverbindungen der allgemeinen Formel (2) gewinnt man aus den entsprechenden 2-Carboxy-sulfophenylhydrazin-Verbindungen, — die in an und für sich üblicher und bekannter Weise, beispielsweise aus den entsprechenden Diazoniumverbindungen mit Salzen der schwefligen Säure unter Hydrolyse der intermediären N-Sulfonsäuren mit Mineralsäuren hergestellt werden können —, vorzugsweise ohne deren Zwischenisolierung, durch Umsetzung mit dem Benzaldehyd oder Chlorbenzaldehyd.

Das als Ausgangsverbindung dienende aromatische Amin der Formel (3) läßt sich in an und für sich bekannter Weise herstellen, beispielsweise durch Umsetzung von 4-β-Hydroxyäthylsulfonyl-2-aminophenol mit konzentrierter, vorzugsweise Schwefeltrioxid enthaltender Schwefelsäure.

Die erfindungsgemäßen Kupferkomplexformazanverbindungen besitzen wertvolle Farbstoffeigenschaften ; infolge ihrer β-Sulfatoäthylsulfonylgruppe besitzen sie auch faserreaktive Eigenschaften. Sie werden bevorzugt zum Färben (im allgemeinen Sinne, wie bspw. einschließlich Massefärbung und Druckfärbung) von hydroxy-, amino- oder carbonamidgruppenhaltigen Materialien, beispielsweise in Form von Flächengebilden, wie Folien, Papier und Leder, oder in der Masse, wie Polyamid und Polyurethan, insbesondere von solchen Materialien in Faserform, verwendet.

Die vorliegende Erfindung betrifft demnach auch die Verwendung der Verbindungen der allgemeinen Formel (1) (einschließlich Massefärbung und Druckfärbung) dieser Materialien bzw. Verfahren zum Färben solcher Materialien in an und für sich üblicher Verfahrensweise, bei welchen eine Verbindung der allgemeinen Formel (1) als Farbmittel eingesetzt wird. Bevorzugt kommen die Materialien in Form von Fasermaterialien zur Anwendung, insbesondere in Form von Textilfasern.

Hydroxygruppenhaltige Materialien sind natürliche oder synthetische hydroxygruppenhaltige Materialien, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern ; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die erfindungsgemäßen Verbindungen lassen sich auf den genannten Substraten, insbesondere auf den genannten Fasermaterialen, nach den für wasserlösliche Farbstoffe, insbesondere für faserreaktive Farbstoffe bekannten Anwendungstechniken applizieren und fixieren.

So erhält man mit ihnen auf Cellulosefasern nach den Ausziehverfahren aus langer Flotte unter Verwendung von verschiedensten säurebindenden Mitteln und gegebenenfalls neutralen Salzen, wie beispielsweise Natriumchlorid oder Natriumsulfat, sehr gute Farbausbeuten. Man färbt bei Temperaturen zwischen 60 und 100 °C, gegebenenfalls bei Temperaturen bis zu 120 °C unter Druck, gegebenenfalls in Gegenwart von üblichen Färbereihilfsmitteln, in wäßrigem Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten erhalten, wobei durch Verweilen bei Raumtemperatur oder erhöhter Temperatur, beispielsweise bis zu etwa 60 °C, durch Dämpfen oder mit Trockenhitze in üblicher Weise fixiert werden kann.

Ebenfalls nach den üblichen Druckverfahren für Cellulosefasern, die einphasig, beispielsweise in Anwesenheit von Natriumbicarbonat oder anderer säurebindender Mittel in der Druckpaste und durch anschließendes Dämpfen bei 101 bis 103 °C, oder zweiphasig, beispielsweise mit neutraler oder schwach saurer Druckfarbe bedruckt und dann entweder durch Hindurchführen durch ein heißes elektrolythaltiges alkalisches Bad oder durch Überklotzen mit einer alkalischen elektrolythaltigen Klotzflotte und anschließendem Verweilen dieses behandelten Materials oder anschließendem Dämpfen oder anschließender Behandlung mit Trockenhitze, durchgeführt werden können, erhält man farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Verbindungen erhaltenen Fixiergrade sehr hoch.

Bei der Fixierung mittels Trockenhitze nach den üblichen Thermofixierverfahren verwendet man Heißluft von 120 bis 200 °C. Neben dem üblichen Wasserdampf von 101 bis 103 °C kann auch überhitzter Dampf und Druckdampf von Temperaturen bis zu 160 °C eingesetzt werden.

Die säurebindenden und die Fixierung der Farbstoffe auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas und Trinatriumphosphat.

Durch die Behandlung der erfindungsgemäßen Verbindungen mit den säurebindenden Mitteln, gegebenenfalls unter Wärmeeinwirkung, werden die erfindungsgemäßen Verbindungen (Farbstoffe) chemisch an die Cellulosefaser gebunden ; insbesondere die Cellulosefärbungen zeigen nach der üblichen Nachbehandlung durch Spülen zur Entfernung von nicht fixierten Farbstoffanteilen auch ausgezeichnete Naßechtheiten.

Für das coloristische Verhalten der erfindungsgemäßen Verbindungen ist besonders hervorzuheben, daß sie sich durch gute Stabilität in Druckpasten und Klotzflotten, auch in Anwesenheit von Alkali, durch ein sehr gutes Ziehvermögen aus langer Flotte, durch guten Farbaufbau nach den üblichen Färbe- und Druckverfahren, durch eine gleiche Farbtiefe beim Färben auf Baumwolle und Regeneratcellulosefasern

durch ein egales Warenbild der mit ihnen hergestellten Färbungen und Drucke und ebenfalls durch einen gleichmäßigen Ausfall der Färbungen aus langer Flotte bei Zugabe verschiedener Mengen an Elektrolyten auszeichnen.

Die Färbungen auf Polyurethanfasern und Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure und/oder auf Basis eines Umsetzungsproduktes von beispielsweise Stearylamin mit Äthylenoxid. In der Regel wird das zu färbende Material bei einer Temperatur von etwa 40 °C in das zuerst schwach alkalisch eingestellte Bad eingebracht, dort einige Zeit darin bewegt, das Färbebad dann auf einen schwach sauren, vorzugsweise schwach essigsauren, pH-Wert eingestellt und die eigentliche Färbung bei einer Temperatur zwischen 60 und 98 °C durchgeführt. Die Färbungen können aber auch bei Siedetemperatur oder bei Temperaturen bis zu 120 °C (unter Druck) ausgeführt werden.

Die mit den erfindungsgemäßen Verbindungen hergestellten Färbungen und Drucke zeichnen sich durch sehr reine, vorwiegend blaue Farbtöne aus. Insbesondere die Färbungen und Drucke auf Cellulosefasermaterialien besitzen eine hohe Farbstärke, wie bereits erwähnt, eine sehr gute Licht- und Reibechtheit und vorzügliche Naßechtheiten, wie Wasch-, Chlorbleich-, Chlorbadewasser-, Walk-, Alkali- und Schweißechtheiten. Nicht fixierte Anteile an Farbstoff lassen sich leicht und vollständig wieder aus dem Fasermaterial auswaschen, was eine wesentliche Voraussetzung für die guten Naßechtheiten der ehältlichen Färbungen ist. Desweiteren sind die Färbungen gegen die üblichen Kunstharzappreturen stabil. Ein Teil der erfindungsgemäßen Verbindungen (Farbstoffe) erreichen in der Reinheit des Farbtones den üblichen Anthrachinonstandard und haben darüber hinaus den Vorteil, daß sie sehr viel leichter ätzbar sind als die erwähnten Anthrachinonfarbstoffe.

Die nachstehenden Beispiele dienen zur Erläuterung der Erfindung. Die darin genannten Teile sind Gewichtsteile, die Prozentangaben stellen Gewichtsprozente dar, sofern nicht anders vermerkt. Gewichststeile beziehen sich zu Volumenteilen wie Kilogramm zum Liter.

## Beispiel 1

32,0 Teile des Hydrazons aus 2-Carboxy-phenylhydrazin-4-sulfonsäure mit Benzaldehyd werden in 200 Teilen Wasser von 20 bis 25 °C angeschlämmt und durch Zugabe einer wäßrigen Natronlauge bei einem pH-Wert von 6,5 bis 7 gelöst. Diese Lösung wird bei einer Temperatur von 5 bis 15 °C mit der wäßrigen Diazoniumsalzlösung aus 4-β-Sulfatoäthylsulfonyl-2-aminophenol-6-sulfonsäure, die durch übliche Diazotierung in wäßriger Lösung von 37,7 Teilen dieses Aminophenols erhalten wurde, und anschließend tropfenweise bei 10 bis 15 °C mit 100 Volumenteilen einer wäßrigen 1-molaren Kupfersulfatlösung innerhalb von 15 Minuten versetzt, wobei man jeweils mit insgesamt 18 Teilen Natriumcarbonat den pH-Wert zwischen 5,5 und 6,5 hält. Man rührt noch 1 Stunde bis zur Beedigung der Kupplungsreaktion bei Raumtemperatur nach und stellt sodann die Reaktionsmischung mit 30 Volumenteilen konzentrierter Salzsäure auf einen pH-Wert von etwa 1. Man rührt diese stark saure Lösung eine Stunde weiter, versetzt dann mit Natrium- oder mit Kaliumcarbonat bis zu einem pH-Wert von 5,5 und fällt sodann die gebildete Kupferkomplex-Formazanverbindung mittels Natrium- bzw. Kaliumchlorid aus, filtriert sie ab, wäscht sie mit verdünnter wäßriger Natrium- bzw. Kaliumchloridlösung und trocknet sie bei 80 °C. Es wird ein dunkles Pulver erhalten, das sich in Wasser mit dunkelblauer Farbe löst. Es enthält als elektrolythaltiges Pulver das entsprechende Alkalimetallsalz (Natrium- oder Kaliumsalz) der Verbindung der Formel

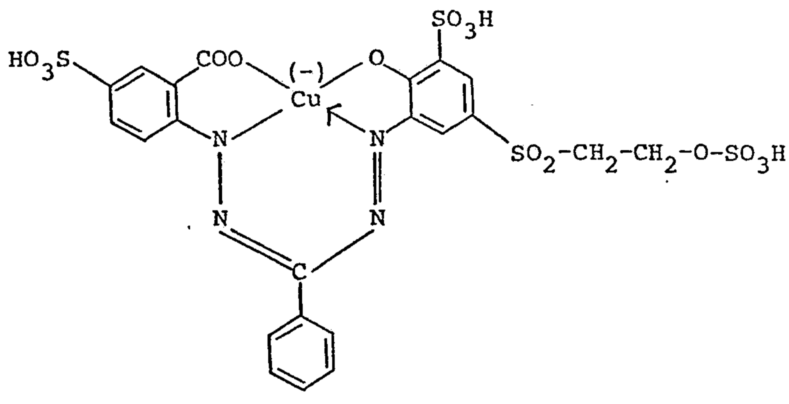

Diese Verbindung eignet sich sehr gut als Farbstoff und färbt Baumwolle und regenerierte

Cellulosefasern aus langer Flotte in Gegenwart eines säurebindenden Mittels in reinen blauen Farbtönen. Die in üblicher Weise nach 10 minütigem Seifen und Spülen mit Wasser nachbehandelten Färbungen zeigen sich als sehr licht- und naßecht.

Beispiel 2

32,0 Teile des Hydrazons aus 2-Carboxy-phenylhydrazin-5-sulfonsäure und Benzaldehyd werden in 300 Teilen Wasser bei 20 bis 25 °C angeschlämmt und mit einer wäßrigen Natronlauge 20 bis 25 °C angeschlämmt und mit einer wäßrigen Natronlauge bei einem pH-Wert von 6,5 bis 7 gelöst. Zu dieser Lösung läßt man gleichzeitig die wäßrige Diazoniumsalzlösung des durch übliche Diazotierung von 37,7 Teilen 4-β-Sulfatoäthylsulfonyl-2-aminophenol-6-sulfonsäure erhaltenen Diazoniumsalzes und 100 Volumenteile einer wäßrigen 1-molaren Kupfersulfatlösung (die Diazoniumsalzlösung und die Kupfersulfatlösung können zuvor auch vereinigt werden) innerhalb von 10 bis 20 Minuten hinzulaufen und hält dabei die Temperatur zwischen etwa 5 und 20 °C, vorzugsweise 10 bis 15 °C, und den pH-Wert mit etwa 19 Teilen Natriumcarbonat auf 5,5 bis 6,5. Diese Reaktionsmischung läßt man noch etwa eine Stunde bei etwa 15 bis 25 °C rühren und stellt sodann mit etwa 30 Volumenteilen konzentrierter Salzsäure auf einen pH-Wert von 1 ein. Die saure Lösung wird eine Stunde lang bei etwa 20 °C gehalten und danach mit Kaliumcarbonat auf einen pH-Wert von 5,5 gestellt ; die gebildete Kupferkomplexformazan-Verbindung wird mit Kaliumchlorid ausgefällt, abfiltriert, mit verdünnter wäßriger Kaliumchloridlösung gewaschen und bei 80 °C gut getrocknet. Es wird ein dunkles Pulver erhalten, das das Alkalimetallsalz, vorwiegend das Kaliumsalz, der Verbindung der Formel

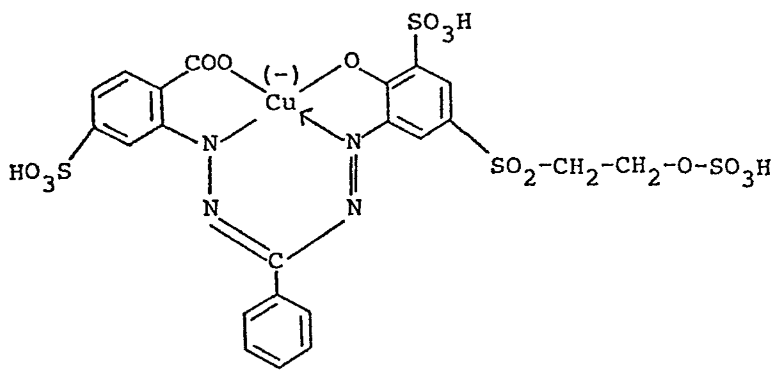

zusammen mit Elektrolyt (Kaliumchlorid) enthält.

Diese Kupferkomplexformazanverbindung eignet sich sehr gut als wasserlöslicher Farbstoff zum Färben von Cellulosefasermaterialien und Polyamidfasermaterialien. Nach üblichen Applizier- und Fixiermethoden erhält man kräftige, klare blaue Färbungen und Drucke mit hoher Farbstärke und sehr guten Licht- und Naßechtheiten.

Beispiel 3

35,5 Teile des Hydrazons aus 2-Carboxy-phenylhydrazin-4-sulfonsäure und 2-Chlor-benzaldehyd werden in 250 Teilen Wasser von 15 bis 25 °C angeschlämmt und mit einer wäßrigen Natronlauge bei einem pH-Wert von 6,5 bis 7 gelöst. 150 Volumenteile einer Kupfersulfatlösung, die 25 Teile kristallines Kupfersulfat enthält, werden hinzugegeben, wobei der pH-Wert bei 6 bis 7 gehalten wird. Diese Lösung versetzt man mit der wäßrigen Lösung des aus 37,7 Teilen 4-β-Sulfatoäthylsulfonyl-2-aminophenol-6-sulfonsäure durch übliche Diazotierung erhaltenen Diazoniumsalzes ; bei Zugabe der Diazoniumsalzlösung wird mit Natriumcarbonat ein pH-Wert von 5,5 bis 6,5 gehalten. Man rührt das Reaktionsgemisch eine Stunde zur Beendigung der Kupplungsreaktion und Metallisierungsreaktion nach und gibt dann zur Einstellung eines pH-Wertes von 1 etwa 30 Volumenteile konzentrierte Salzsäure hinzu. Diese stark saure Lösung wird eine Stunde lang nachgerührt, sodann mit Natrium- oder mit Kaliumcarbonat auf einen pH-Wert von 5,5 gestellt. Mittels Natrium- bzw. Kaliumchlorid wird die gebildete Kupferkomplexformazanverbindung ausgefällt und abfiltriert, mit verdünnter wäßriger Natrium- oder Kaliumchloridlösung gewaschen und bei 80 °C gut getrocknet. Die so als Natrium- oder Kaliumsalz erhaltene Kupferkomplexverbindung besitzt, in Form der freien Säure geschrieben, die Formel

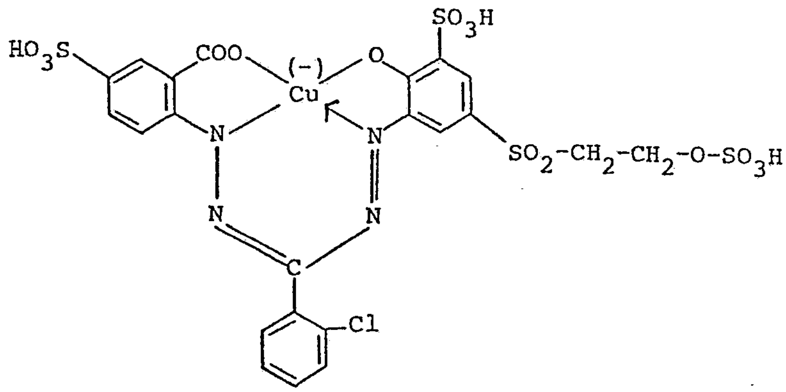

Sie besitzt sehr gute Farbstoffeigenschaften und färbt Cellulosefasermaterialien nach üblichen Applikations- und Fixierverfahren für faserreaktive Farbstoffe in rotstichig blauen Tönen mit guten Echtheiten, insbesondere guten Lichtechtheiten.

**Ansprüche**

1. Kupferkomplex-Formazanverbindungen der allgemeinen Formel (1)

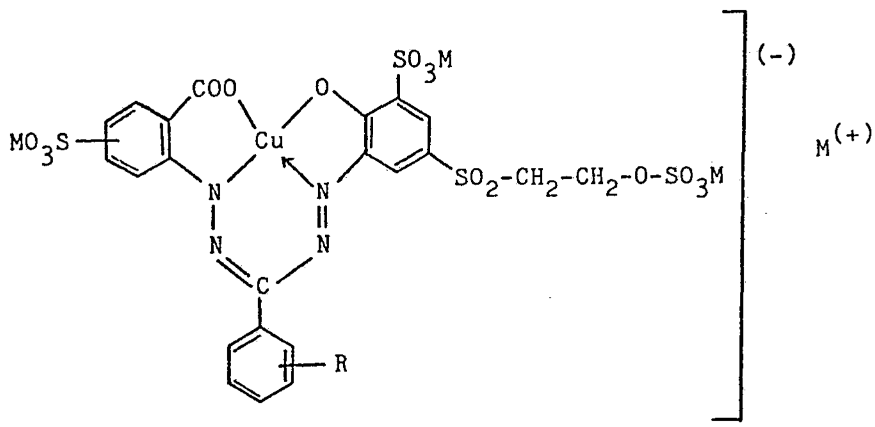

(1)

in welcher M ein Wasserstoffatom oder das Äquivalent eines Metalls ist und R für ein Wasserstoffatom oder ein Chloratom steht.

2. Verbindung nach Anspruch 1 der Formel

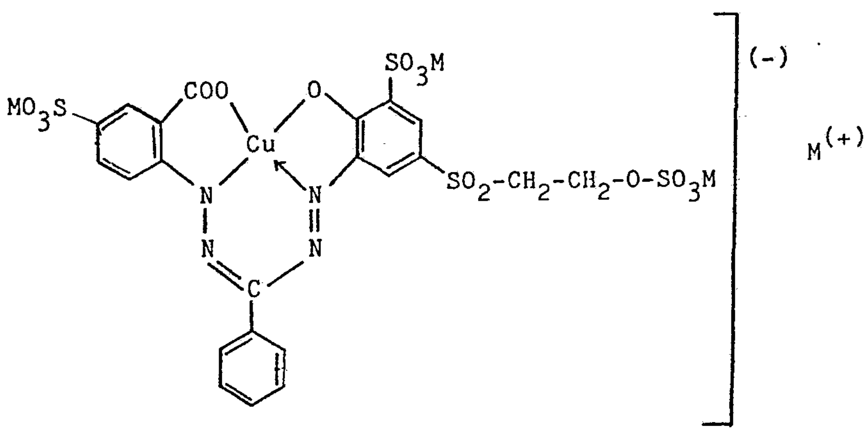

mit M der in Anspruch 1 genannten Bedeutung, vorzugsweise Natrium oder Kalium.

3. Verbindung nach Anspruch 1 der Formel

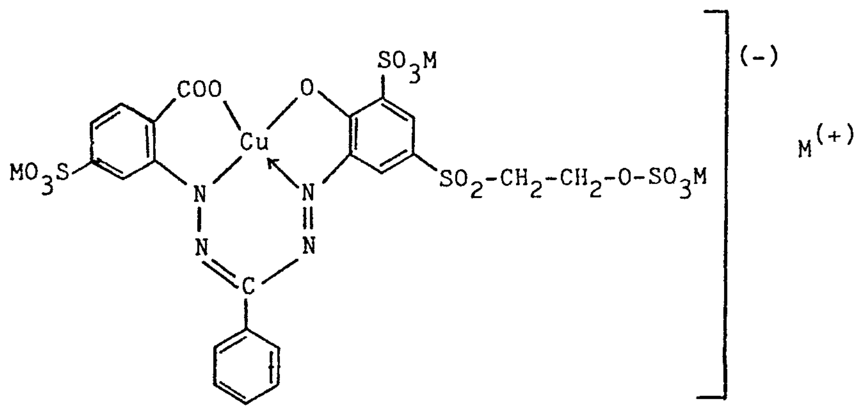

mit M der in Anspruch 1 genannten Bedeutung, vorzugsweise Natrium oder Kalium.

4. Verfahren zur Herstellung der in Anspruch 1 genannten und definierten Verbindungen der allgemeinen Formel (1), dadurch gekennzeichnet, daß man eine aromatische Hydrazonverbindung der allgemeinen Formel (2)

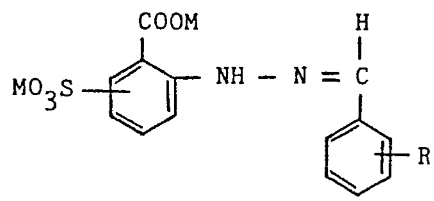

(2)

in welcher R und M die in Anspruch 1 genannten Bedeutungen haben, mit der Diazoniumverbindung eines aromatischen Amins der Formel (3)

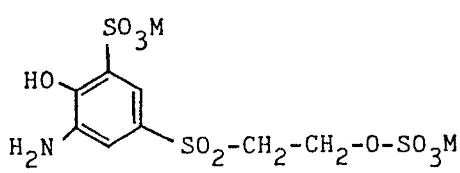

(3)

in welcher M die in Anspruch 1 genannte Bedeutung hat, und mit einem kupferabgebenden Mittel umsetzt.

5. Verfahren nach Anspruch 4, dadurch gekennzeichnet, daß man die Umsetzung bei einem pH-Wert von 4 bis 7 und bei einer Temperatur zwischen etwa 0 bis 20 °C durchführt.

6. Verfahren nach Anspruch 4 oder 5, dadurch gekennzeichnet, daß man nach Herstellung der Verbindung der allgemeinen Formel (1) die Lösung dieser Verbindung auf einen pH-Wert von unterhalb 2 stellt und sie bei Raumtemperatur etwa 30 Minuten bis 2 Stunden hält.

7. Verwendung der in Anspruch 1 definierten Verbindungen als Farbstoffe.

8. Verwendung nach Anspruch 7 zum Färben oder Bedrucken von hydroxy-, amino- oder carbonamidgruppenhaltigem Material.

**Claims**

1. Copper complex formazan compounds of the general formula (1)

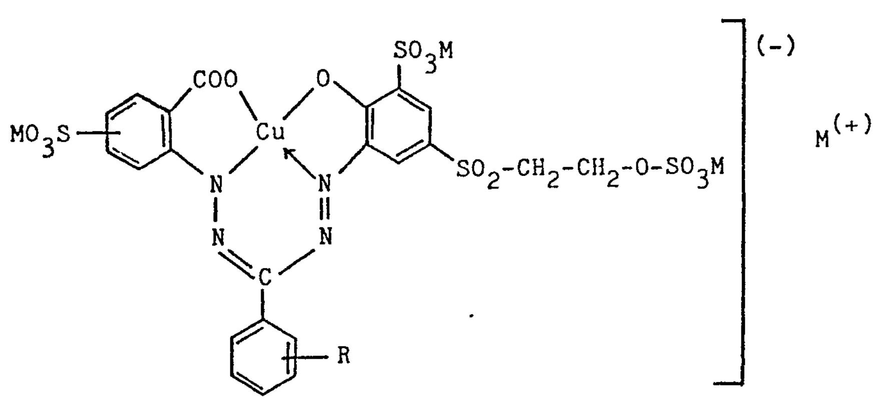

(1)

in which M is a hydrogen atom or the equivalent of a metal and R is a hydrogen atom or chlorine atom.

2. Compound according to claim 1 of the formula

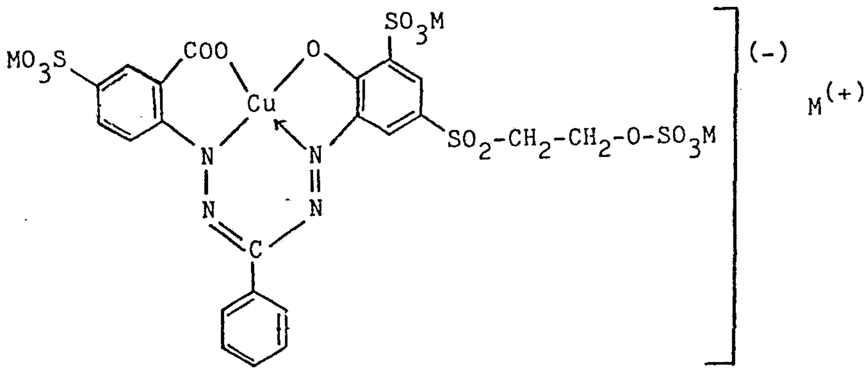

in which M has the meaning mentioned in claim 1, preferably is sodium or potassium.

3. Compound according to claim 1 of the formula

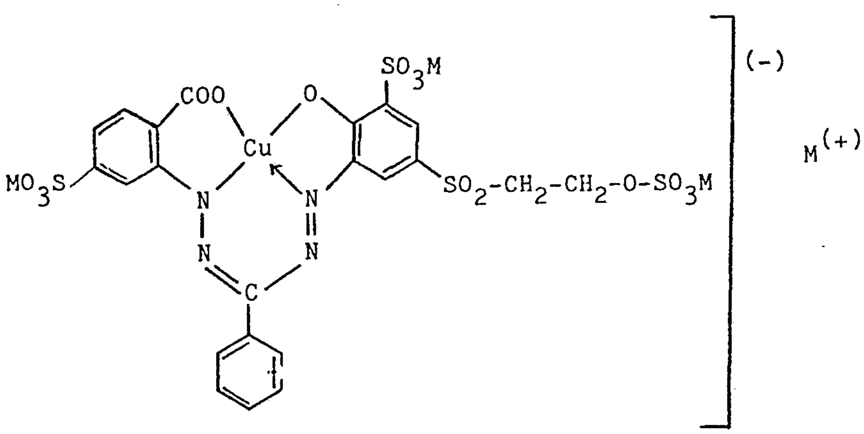

in which M has the meaning mentioned in claim 1, preferably is sodium or potassium.

4. Process for the manufacture of the compounds of the general formula (1) mentioned and defined in claim 1, characterized by that an aromatic hydrazone compound of the general formula (2)

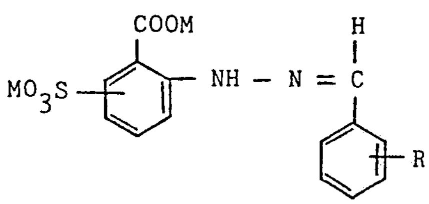

(2)

in which R and M have the meanings mentioned in claim 1, is reacted with the diazonium compound of an aromatic amine of the formula (3)

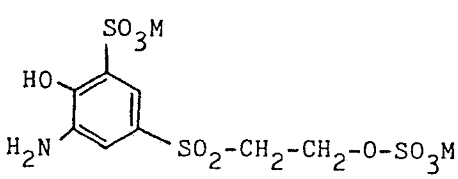

(3)

in which M has the meaning mentioned in claim 1, and with a copper-donating agent.

5. The process according to claim 4, characterized in that the reaction is carried out a pH value of from 4 to 7 and at a temperature between about 0 and 20 °C.

6. The process according to claim 4 or 5, characterized in that the reaction solution is adjusted, after the manufacture of the compound of the general formula (1), to a pH value of below 2 and this solution is maintained at said pH for about 30 minutes to 2 hours at room temperature.

7. Use of the compounds defined in claim 1, as dyestuffs.

8. Use according to claim 7 for dyeing or printing a material containing hydroxy, amino or carbonamide groups.

**Revendications**

1. Composés formazaniques complexes du cuivre de formule générale (1)

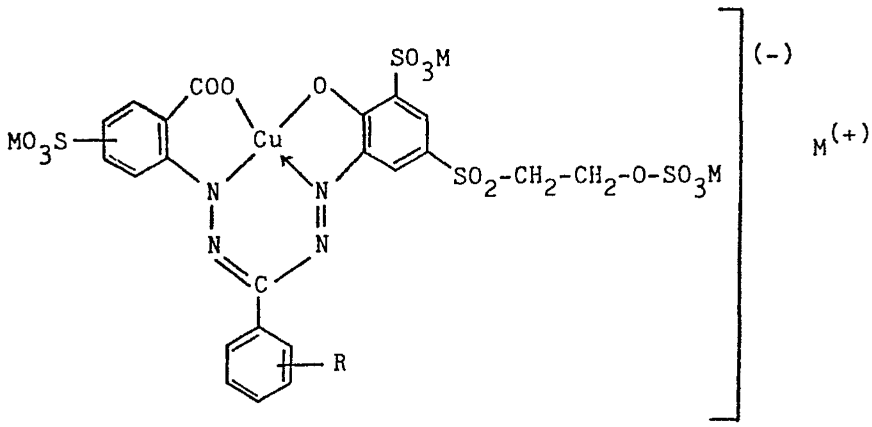

(1)

dans laquelle M représente un atome d'hydrogène ou bien l'équivalent d'un métal et R représente un atome d'hydrogène ou bien un atome de chlore.

2. Composé selon la revendication 1, de formule

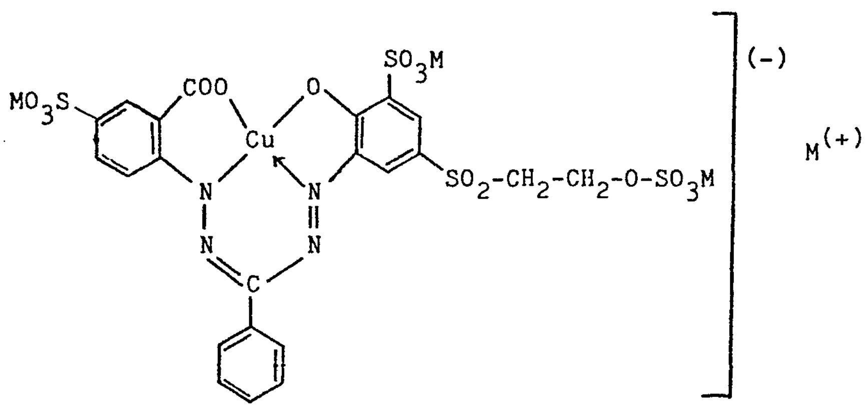

où M a la signification indiquée dans la revendication 1, et représente de préférence du sodium ou du potassium.

3. Composé selon la revendication 1, de formule

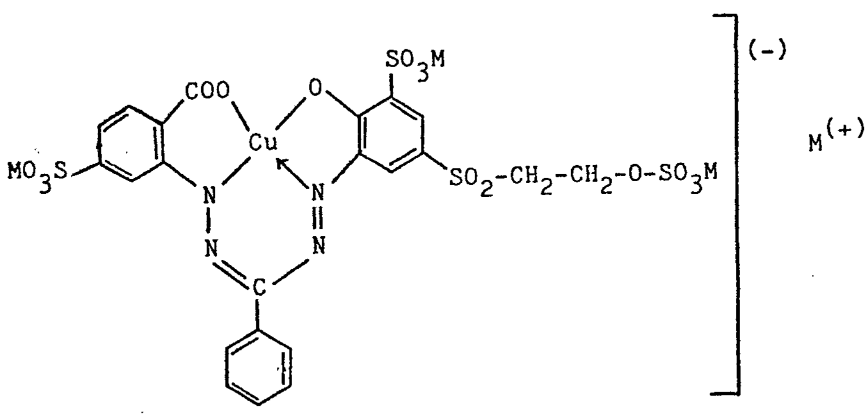

où M a la signification indiquée dans la revendication 1 et représente de préférence du sodium ou du potassium.

4. Procédé de préparation des composés mentionnés et définis dans la revendication 1, de formule générale (1), caractérisé en ce qu'on fait réagir une hydrazone aromatique de formule générale (2)

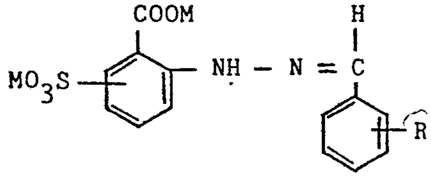

(2)

dans laquelle R et M ont les significations indiquées dans la revendication 1, avec le dérivé diazoïque d'une amine aromatique de formule (3)

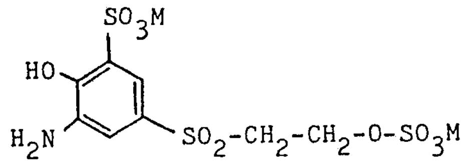

(3)

dans laquelle M a la signification indiquée dans la revendication 1, ainsi qu'avec un donneur de cuivre.

5. Procédé selon la revendication 4, caractérisé en ce qu'on effectue la réaction à une valeur du pH de 4 à 7 et à une température comprise entre environ 0 et 20 °C.

6. Procédé selon la revendication 4 ou 5, caractérisé en ce qu'après la préparation du composé de formule générale (1), on règle le pH de la solution de ce composé à une valeur inférieure à 2 et on maintient la solution à température ambiante pendant environ 30 minutes à 2 heures.

7. Utilisation des composés définis dans la revendication 1 comme colorants.

8. Utilisation selon la revendication 7, pour teindre ou imprimer une matière renfermant des groupes hydroxy, amino ou carbamoyle.